# EUROPEAN PATENT APPLICATION

(11) **EP 1 738 645 A1**
(43) Date of publication of application: **03.01.2007**
(21) Application number: 05076487.7
(22) Date of filing: 28.06.2005
(51) Int. Cl.: A01M 1/04, A01M 1/14, A01M 1/22

(54) **System for trapping insects**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: van Duijn, Albert, 2341 BV Oegstgeest (NL); Draaijer, Arie, 3704 BM Zeist (NL)
(74) Representative: Winckels, Johannes Hubertus F.

(57) **Abstract**

System for trapping insects, including:
-a light source (1);
-at least one trap (2), being spaced-apart from said light source (1), each trap including at least one light emission surface (S), the trap (2) being configured to capture said insects at or near said light emission surface (S);
- at least one light-guide (3) extending between the light source (1) and said trap to feed the trap (2) with light produced by the light source (1), such that said light emission surface (S) emits insect attracting light during use.

## Description

The invention relates to a system for trapping insects, for example flying insects.

Various insect-trapping systems are known from practice. For example, it is known to illuminate an insect trapping film, composed of a substrate, a fluorescent layer and a tacky adhesive layer, with ultraviolet (UV) light, see for example JP 2003199471. This known trapping system is further composed of an UV light source to provide said UV light, wherein said insect trapping film extends around said light source, on a frame. However, the known systems are relatively user unfriendly, expensive, complex, energy-inefficient, and relatively complex to install, especially when flying insects have to be trapped in large spaces such as plant warehouses, large greenhouses or other large areas.

The present invention aims to alleviate at least part of the above-mentioned problems. In particular, the invention aims to provide a relatively simple and efficient system for trapping insects.

According to an aspect of the invention, a system for trapping insects includes:
- a light source;
- at least one trap, being spaced-apart from said light source, each trap including at least one light emission surface, the trap being configured to capture said insects at or near said light emission surface;
- at least one light-guide extending between the light source and said trap to feed the trap with light produced by the light source, such that said light emission surface emits insect attracting light during use.

During use, wherein said light source can be activated to produce light. The light can at least partly be fed to or into said trap by said at least one light-guide. Then, said light emission surface can emit insect attracting light as a result of the respective trap receiving the light from the at least one light guide. Insects will be attracted towards that light, and can be caught by the trap.

To catch the insects, preferably, the trap includes at least one sticky surface. For example, at least part of and preferably substantially all of the light emission surface is a sticky surface.

On the other hand, for example, the trap can be configured to electrocute insects. In that case, the trap can be provided, as an example, with electrical wiring, with a electrically conducting pattern, an Indium Tin Oxide (ITO) pattern and/or other means, to be connected to a power source during use, as electrocution means. Such electrical wiring, with a electrically conducting pattern can be provided on and/or in front of said light emission surface.

Since the system includes at least one light guide, the at least one trap can be space-apart from the light source over a relatively long distance. Said light guide can feed each trap with a sufficient amount of source light, such that the trap can emit the insect attracting light via the light emission surface. For example, the distance between said trap and the light source can be at least circa 1 m, or an other distance. Also, the trap can be located at a location that is relatively difficult to reach, for example at a relatively high location and/or between or near dense vegetation. The light source can be located at a location which is more easily accessible, for example a location where light source maintenance and/or replacement can be carried out. The insects to be trapped can be flying insects, but can also include non-flying insects.

In a preferred embodiment, the system is provided with a plurality of spaced-apart traps to trap insects at various locations.

In that case, one light source can power a plurality of traps, wherein said light guide serves to feed each of the traps with the light produced by the light source. In this way, a relatively large area can be provided with a large number of traps, wherein only one light source has to be used to produce light to power the traps with light. Therefore, a relatively simple and energy-efficient system can be provided, the system preferably being able to capture a large amount of insects in an environment friendly way. Similarly, a plurality of light sources can be applied, wherein each of the light sources is coupled to or associated with a plurality of said traps by respective light guides.

Each trap can be arranged in various ways. In an embodiment of the invention, each said trap is constructed to scatter and/or emit the light, received from the respective light guide, directly as insect attracting light. In that case, the light that is produced by the light source can be used directly as insect attracting light, to be emitted via said light emission surface.

On the other hand, one or more traps can also be constructed to transform or convert the light received from the respective light guide into said insect attracting light. For example, the light source can produce light of a first wavelength, whereas the insect attracting light has a different, second, wavelength. This can be achieved, for example, when said trap includes a fluorescent material to transform or convert the light received from the respective light guide into said insect attracting light. Then, in an embodiment of the invention, said fluorescent material can include down-conversion material, for example to convert light source light of a first wavelength at least partly into insect attracting light of a second wavelength, wherein the first wavelength is smaller than the second wavelength. As an example only, in the last-mentioned case, the light source can produce UV light, wherein at least part of the insect attracting light includes near-UV light or visible light.

Also, according to a preferred embodiment of the invention, said fluorescent material includes up-conversion material, for example up-conversion phosphor material. In that case, the contamination trap can convert light source light into insect attracting light having a smaller wavelength. As an example only, in the last-mentioned case, the light source can produce infrared (IR) light or red light, wherein at least part of the insect attracting light includes near-UV light or UV-light.

Besides, each trap can be at least constructed from foil and/or plate material, and/or in a different way. It is preferred, when each trap is at least partly replaceable during use, for example to replace a used up insect capturing surface with a fresh one. Besides, each said trap can for example be constructed from substantially transparent light conducting and/or light scattering material.

The light source can be arranged in various ways. For example, the light source can include a lamp, a gas discharge lamp, a laser, or a different type of light source. The light source can be used or arranged to continuously, periodically and/or intermittently emit said light. Also, during use, said insect attraction light can be continuous, periodical and/or and intermittent light.

Besides, as an example, the light source can be arranged to produce light of at least two different wavelengths during use, for example UV-light and non-UV light respectively. Light of different frequencies can be emitted, for example, simultaneously, intermittently and/or subsequently. It has been found, that some types of insects, particularly some types of flying insects, are more attracted by UV-light whereas other types of (flying) insects by non-UV-light such as visible light. In that case, for example, the trap can subsequently emit insect attracting light of said different frequencies, for example to subsequently attract and capture different types of insects.

Also, said light source can be arranged to emit broad spectrum UV light during use, for example to be used directly or indirectly by said trap attract various types of insects at the same time. It has been found that the use of broad spectrum UV light as insect attracting light can be surprisingly effective in capturing whitefly.

According to a preferred embodiment of the invention, said light source include at least one Light Emitting Diode (LED), for example a power LED, or an array of LEDs. Therefore, a relatively energy-efficient insect trapping system can be provided. The LED can produce relatively concentrated light, for example light having relatively little divergence from an optical axis. The LED light can be substantially directed into said light guide and fed to said trap without much losses. In a further aspect of the invention, the LED is constructed to emit infrared light, and/or red light, during use. This can be particularly advantageous when the trap includes up-conversion material, for example up-conversion phosphor material, to convert infrared light into insect attracting light of a smaller wavelength, as follows from the above.

Said at least one light guide can be provided in various ways. For example, only one light guide can be provided to guide said source light to a plurality of said traps. On the other hand, a plurality of light guides can be provided to guide the source light to a plurality of said traps. Besides, the at least one light guide can be provided with a number of light splitters, to split the source light into a number of light bundles, to be fed to a respective number of traps. Also, the at least one light-guide can be coupled in various ways to said trap to feed the trap with source light. As an example, a light emission part of the light guide can be coupled to an edge part, or boundary part, of said trap, to direct light therein.

In an aspect of the invention, said at least one light guide is at least partly, and preferable substantially, made of flexible material. For example, the flexible light guide can be used to conduct the light of the light source around one or more corners, through dense vegetation and/or to difficult to get to locations.

In a preferred embodiment of the invention, said light guide at least include one or more light guiding fibres, for example one or more glass or plastic containing fibres, light guiding capillaries and/or a bundle of fibres or capillaries.

In this way, the source light can be guided over relatively long distances with relatively little losses. In that case, the at least one trap can be distanced relatively far from the light source, for trapping insect at certain desired remote locations. Also, the light guiding fibres, for example optic fibres, can be installed relatively easily, can be relatively durable and maintenance-free, and can feed each trap with source light efficiently.

In an aspect of the invention, the system includes at least one suspension structure from which said at least one trap can be suspended during use. In that case, it is preferred when said suspension structure includes at least part of said light guide. For example, said light guide can serve to transmit the source light, and to hold or suspend said trap at a desired location as well. For example, said at least one or more light guiding fibres can serve to suspend a number of traps, for example near or under a ceiling of a space to be kept free of insects, above and/or between plants or at other desired locations.

In an other aspect of the invention, a system for trapping insects, for example a system according to any of the preceding claims, includes a light source and at least one trap, each trap including at least one light emission surface, the trap being configured to capture said insects at or near said light emission surface, wherein during use the trap is being fed by light produced by the light source, wherein the light source includes at least one light emitting diode.

In that case, the above-mentioned advantaged concerning the light emitting diode can be obtained. Also, the system according to the present aspect of the invention can include one or more light guides, but this is not essential.

The invention further provides a trap configured to capture insects, the trap including at least one light emission surface, wherein the trap can be connectable or connected to one or more light guides to feed the trap with light during use, such that the light emission surface emits insect attracting light during use. Such a trap ca provide above-mentioned advantages.

Also, the invention provides a light guide, wherein the light guide is connectable or connected to a light source and to at least one trap, to feed the at least one trap with light produced by the light source during use. Such a guide can provide above-mentioned advantages.

Embodiments of the invention will now be described, by way of example only, with reference to the accompanying schematic drawings in which corresponding reference symbols indicate corresponding parts, and in which:
figure 1 schematically depicts a first embodiment of the invention; and
figure 2 schematically depicts a second embodiment of the invention.

In the present patent application, the term "light" should be construed broadly, since it can include, amongst others, deep UV light, uv-light, near-uv light, visible light, infra red light, polarised light and/or non-polarised light. Also, the term "trapping" should be construed broadly, since it can mean -for example- killing, capturing and/or retaining insects, and/or neutralizing insects in an other way.

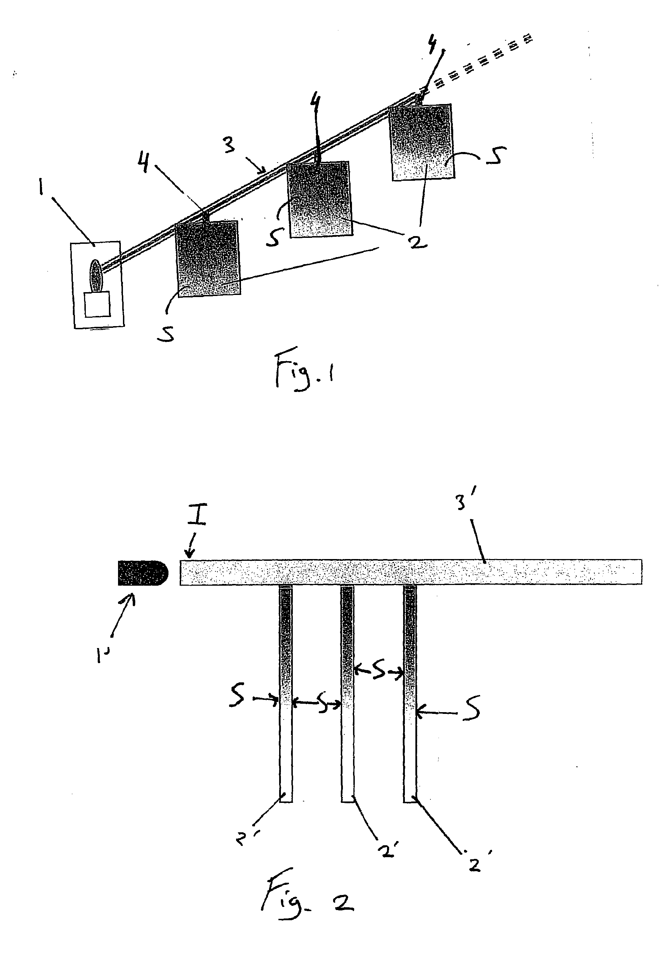

Figure 1 depicts a first embodiment of the invention. The first embodiment is a system for trapping insects, for example flying insects. The system includes only one light source 1 and a plurality of traps 2, being spatially associated with the light source. Each trap 2 is spaced-apart from said light source 1. The traps 2 are also spaced-apart from one another.

Each trap 2 includes at least one light emission surface S, which surface can also serve as an insect capturing surface. For example, the light emission surface S can include a sticky surface or coating to capture insects. Alternatively, as an example, the light emission surface S can be provided with electrocution wiring or an electrically conducting electrocution pattern to capture or kill insects.

Besides, the system is provided with a light guide 3 extending between the light source 1 and said traps 2, to feed each trap 2 with light produced by the light source 1, such that said light emission surfaces S emit insect attracting light during use. For example, each trap 2 can be configured to emit a certain insect attracting light as a result of the trap 2 receiving the source light from the guide 3.

As has been mentioned above, the light source 1 can be arranged in various ways, and may include a lamp, laser, or a different light source. In one embodiment, the light source can be constructed to produce and emit UV light, of one or more frequencies, which light is transmitted by the light guide 3 to the traps 2 during use.

Preferably, the system is designed to transmit a relatively large amount of light, produced by the light source 1, via the light guide 3 to the traps 2. For example, the source 1 can be arranged to direct a concentrated light bundle into the light guide 3. Also, the system or light source 1 can include a light collector, focuser, and/or light reflector (not particularly shown in Fig. 1) to collect, focus and/or reflect the source light into the light guide 3.

Also, the light guide 3 can be arranged in various ways. Preferably, the light guide 3 substantially consist of one optical fibre, or of a bundle of such fibres. As an example, the light guide 3 can include one or more glass or plastic containing fibres, light guiding capillary tubing and/or a bundle of fibres or capillaries. Also, for example, a bundle of light guides can be branched off or divided at a plurality of positions, to locally feed traps 2 with respective source light. Similarly, as an example, when the light guide 3 is a large bundle of fibres, one fibre or a sub-bundle of fibres can be associated with one trap 2 to transmit the light to that trap 2. Besides, preferably, the light guide 3 is substantially flexible. The light guide 3 can also be constructed in a different way, as follows from the above.

In the present embodiment, each trap 2 is substantially constructed from foil and/or plate material. The light guide 3 preferably serves as a suspension structure from which the traps 2 are being suspended. Thus, the traps 2 can be positioned at relatively high locations, using relatively simple means, which provides better insect capturing results. The traps 2 and light guide 3 can be coupled in various ways to each other. Preferably, each trap 2 is detachably coupled to the light guide 3, so that the trap 2 can be easily exchanged after being used up. In the present embodiment, the light guide 3 is provided with a number of spaced-apart optical trap connectors 4 which can cooperate with respective optical light receiving connectors of the traps 2, to connect the traps 2 to the light guide 3. Said trap connectors 4 and light receiving connectors can be, for example, plug-socket type connectors, or an other connector type. The light receiving connectors can be provided, for example, at boundaries or upper edges of the traps 2. The trap connectors 4 and light receiving connectors can be arranged to transmit light from the light guide 3 into the respective traps 2. In an embodiment of the invention, the traps 2 can be moveably connected to the light guide. For example, the light guide 3 can include a rail along which the traps 2 can be moved to desired capturing locations during use. Such movement can be, for example, manually induced movement, or automated movement by way of a conveying mechanism (not shown). It will be clear to the skilled person how such a conveying mechanism can be constructed and implemented in the present invention.

Preferably, each foil and/or plate material of each trap 2 contains substantially transparent light conducting and/or light scattering material. For example, each trap 2 can be made substantially from glass, one or more suitable plastics. To provide a certain amount of light scattering, the trap 2 can be provided, for example, with light scattering material, small light scattering particles and/or a certain light scattering roughening. Also, the trap 2 can be shaped in a certain way, for example curved, to provide light scattering. Besides, light can be distributed internally in a trap 2 using one or more internal reflections, as will be clear to the skilled person.

In the present embodiment, preferably, each said trap 2 can be constructed to scatter and/or emit the light, received from the light guide 3, as insect attracting light.

During use of the first embodiment, the light source 1 produces light, which is at least partly being fed to and directed into said traps 2 by the light-guide 3,. The light can then be scattered and/or reflected by or in each trap 1, and emitted by the light emission surface S of the trap 2 as insect attracting light, resulting in insects being attracted to the trap 2 and being captured thereby. In this way, a large number of flying insects can be efficiently neutralized in a relatively large area, using relatively simple means and relatively little energy.

Figure 2 shows a second embodiment of the invention. The second embodiment differs from the first embodiment in that the light source is a light emitting diode (LED) 1'. The light emitting diode 1' is directed towards an input butt end I of the light guide 3', to transmit relatively concentrated LED light therein. In an advantageous embodiment, the light emitting diode 1' is arranged to emit infrared light and/or red light during use. A plurality of light traps 3', for example insect trapping plates or foils 3', is coupled or connected at upper sides to the light guide 3', to receive the infrared light respectively red light therefrom. In the present embodiment, each trap 2 can be constructed to transform or convert the light, received from the light guide 3, into a different light which is to be transmitted via its surface S as said insect attracting light. For example, the trap 2 can include fluorescent material to transform or convert the light, received from the light guide 3, into a suitable insect attracting light. In an preferred embodiment, the fluorescent material can at least includes up-conversion material, for example up-conversion phosphor material, for example to convert the infrared/red radiation into light of a higher frequency, such as visible light, near-uv light or uv-light.

Alternatively, the light source 1, 1' can be constructed, for example, to emit deep-uv light, which is transmitted via the light guide 3, 3' to the traps 2, 2'.

The use of the second embodiment is substantially the same as the use of the first embodiment. The second embodiment is relatively energy-efficient because of the application of said LED as a light source. Up-conversion of the LED-light can be used to provide good insect attraction, depending on the type of insects to be captured by the traps.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

For example, the system can include a plurality of similar or different traps 2, 2'. Each trap 2, 2' can have various shapes and sizes, and can be located at various positions during use. For example, each trap 2, 2' can comprise a plurality of insect trapping elements or parallel insect trapping strips, joined together, or such-like.

Each light guide 3, 3'can be arranged in various ways. The light guide 3, 3'can be substantially solid or massive, or hollow. Also, for example, each light guide 3, 3' can have a circular or rectangular cross section, or a different cross-section. As is shown in figures 1 and 2, the light guide 3, 3' can make direct contact with said trap 2, 2', to direct the light into the trap. Alternatively, a gap (not shown in the figures) can extend between said light guide 3, 3' and each said trap 2, 2', wherein light is emitted by said light guide into the gap and towards a light receiving part of the trap. Similarly, there can be a gap between said light source and an input butt end of a light guide.

Also, preferably, the system is of a modular construction, wherein for example a light guide 3, 3' can be extended and/or branched off by a number of further light guides 3, 3'. Besides, in a modular system, a number of further traps 2, 2' can be added to an already installed system. Also, in a further embodiment, one ore more systems of the invention can be joined to each other, for example utilising suitable coupling means or the-like. Moreover, various parts of the system can be supplied and/or sold together or separately.

## Claims

1. System for trapping insects, for example flying insects, including:
- a light source (1);
- at least one trap (2), being spaced-apart from said light source (1), each trap including at least one light emission surface (S), the trap (2) being configured to capture said insects at or near said light emission surface (S);
- at least one light-guide (3) extending between the light source (1) and said trap to feed the trap (2) with light produced by the light source (1), such that said light emission surface (S) emits insect attracting light during use.

2. System according to claim 1, wherein each said trap (2) is constructed to scatter and/or emit the light, received from the respective light guide (3), as insect attracting light.

3. System according to claim 1 or 2, wherein said trap (2) is constructed to transform or convert the light received from the respective light guide (3) into said insect attracting light.

4. System according to any of the preceding claims, wherein said trap (2) includes a fluorescent material to transform or convert the light received from the respective light guide into said insect attracting light.

5. System according to claim 4, wherein said fluorescent material includes up-conversion material, for example up-conversion phosphor material.

6. System according to any of the preceding claims, wherein said light source include at least one Light Emitting Diode.

7. System according to any of the preceding claims, wherein said light source (1) is constructed to emit infrared light or red light during use.

8. System according to any of the preceding claims, wherein said at least one light guide (3) is at least partly, and preferable substantially, made of flexible material.

9. System according to any of the preceding claims, wherein said light guide (3) at least includes one or more light guiding fibres, for example one or more glass or plastic containing fibres, light guiding capillaries and/or a bundle of fibres or capillaries.

10. System according to any of the preceding claims, including at least one suspension structure (3) from which said at least one trap (2) can be suspended during use.

11. System according to claim 10, wherein said suspension structure (3) includes at least part of said light guide.

12. System according to any of the preceding claims, wherein said trap (2) is constructed from substantially transparent light conducting and/or light scattering material.

13. System according to any of the preceding claims, wherein said at least one light-guide (3) is coupled to an edge part, or boundary part, of said trap (2), to direct light therein.

14. System according to any of the preceding claims, wherein said trap (2) is at least constructed from foil and/or plate material.

15. System according to any of the preceding claims, including a plurality of spaced-apart traps (2) to trap insects at spaced-apart locations.

16. System according to any of the preceding claims, wherein said trap (2), for example said light emission surface (S), is provided with at least one sticky surface to capture said insects.

17. System according to any of the preceding claims, wherein said trap (2), for example said light emission surface (S), is constructed to electrocute said insects at or near said light emission surface (S).

18. System for trapping insects, for example a system according to any of the preceding claims, wherein the system includes a light source (1) and at least one trap (2), each trap including at least one light emission surface (S), the trap (2) being configured to capture said insects at or near said light emission surface (S), wherein during use the trap (2) is being fed by light produced by the light source (1), wherein the light source includes at least one light emitting diode.

19. Trap of a system according to any of the preceding claims, the trap being configured to capture insects, for example flying insects, wherein the trap is preferably connectable or connected to one or more light guides to feed the trap with light during use, such that the light emission surface emits insect attracting light during use.

20. Light guide of a system according to any of claims 1-18, wherein the light guide is connectable or connected to a light source and to at least one trap, to feed the at least one trap with light produced by the light source during use, wherein each trap is configures to trap insects, and includes for example at least one sticky light emission surface.

21. Use of a system according to any of claims 1-18 to trap insects, wherein said light source (1) produces light, which is at least partly being fed to said trap by said at least one light-guide, wherein said light emission surface emits insect attracting light as a result of the respective trap receiving the light from the at least one light guide.

22. Use according to claim 21, wherein said light source produces light of at least two different wavelengths.
